# EUROPEAN PATENT SPECIFICATION

(11) **EP 0 909 695 B1**
(45) Date of publication and mention of the grant of the patent: **26.05.2004**
(21) Application number: 98119618.1
(22) Date of filing: 16.10.1998
(51) Int. Cl.: B62H 5/00

(54) **Anti-theft apparatus for a motorcycle**
Diebstahlsicherung für ein Motorrad
Antivol de motocycle

(30) Priority: 20.10.1997 JP 28665197; 16.10.1997 JP 28390397
(43) Date of publication of application: 21.04.1999
(73) Proprietor: YAMAHA HATSUDOKI KABUSHIKI KAISHA, Iwata-shi Shizuoka-ken, 438 (JP)
(72) Inventor: Okamoto, Yasuo c/o Yamaha Hatsudoki K. K., Iwata-shi, Shizuoka-ken (JP); Nara, Kazuhiro c/o Yamaha Hatsudoki K. K., Iwata-shi, Shizuoka-ken (JP); Suzuki, Hitoshi c/o Yamaha Hatsudoki K. K., Iwata-shi, Shizuoka-ken (JP); Katoh, Kazuo c/o Yamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- DE-B- 1 024 839
- GB-A- 450 897
- GB-A- 525 572
- US-A- 4 534 439

## Description

The present invention relates to an antitheft apparatus for motorcycles.

There is a conventional antitheft apparatus for motorcycles employing a handlebar lock device that prevents the steering handlebars from being turned. Such a handlebar lock device employs a constitution in which the steering handlebars are turned in one direction, and when the key inserted in the main switch is turned to the locking position, a lock pin projects from the main switch housing and engages with the steering handlebars.

In addition to the above-described antitheft apparatus for the motorcycle employing the handlebar lock device, there are other devices such as a main stand lock device holding the main stand in the upright position.

However, the thefts occur sometimes even if the handlebars are locked with the handlebar lock device. That is because a screwdriver or the like can be forced into the keyhole of the main switch, and the key cylinder is forcibly turned so that the handlebar lock is unlocked and the engine is started. Even if the vehicle escapes the theft, it is damaged much as the main switch is broken and the vehicle cannot be driven.

Another problem is that since the main stand lock is less likely to be visually noticed, a third person often fails to realize the fact that the antitheft measures is taken, and the third person destroys the main switch without knowing that the vehicle cannot be stolen.

In the case the antitheft measures is taken using the main stand lock, even the owner of the vehicle may sometimes forget to unlock the lock and operate to drive, because the unlocking mechanism is separate from the main switch. In that case, operation is very annoying because the operation for the drive must be interrupted and the antitheft measures must be unlocked. In other words, the more the mechanism for the theft prevention becomes sophisticated, the more the vehicle handling is annoying.

Conventional motorcycles of scooter are provided with a handlebar lock device for locking the handlebars at a steered position and further with an antitheft apparatus such that the vehicle cannot be moved easily even if the handlebar lock is destroyed.

There is one such antitheft apparatus in which the main stand is provided with a lock device for holding the main stand in the upright position. Namely, the theft prevention is arranged such that the main stand cannot be retracted unless the lock device is unlocked.

However, the above-described apparatus using the lock device for the main stand is not effective when the vehicle is parked using the side stand instead of the main stand.

This invention is made to solve the above-described problems and its object is to provide an antitheft apparatus for motorcycles capable of preventing the switch from being destroyed.

This objective is solved by an antitheft apparatus for motorcycles having the features of claim 1.

The invented antitheft apparatus is arranged such that the rider does not forget to unlock the lock at driving operations in the case of attempting the antitheft action.

The invented antitheft apparatus for motorcycles of scooter type is further capable of effecting the theft prevention under the condition whether the main stand or the side stand is used.

Namely, once the protection member is held in the protecting position, the keyhole of the main switch is covered with the protection member and nothing can be forced into the keyhole of the main switch. Furthermore, in the state of the key left inserted in the keyhole, the protection member cannot be moved to the protecting position as the key stands in the way.

Moreover, once the protection member is secured to the protecting position, since the keyhole of the main switch is covered with the protection member and no object can be forced into the keyhole, the main switch is protected from being destroyed, and since the key cannot be inserted into the keyhole, it is impossible to operate to ride the vehicle inadvertently in the locked state. Also, in the state of the key being inserted into the keyhole, the protection member cannot be moved to the protecting position because the key stands in the way. This prevents the key from being inadvertently left inserted.

Further preferred embodiments are laid down in the dependent claims.

In the following, the present invention is explained in greater detail with respect to several embodiments thereof in conjunction with the accompanying drawings, wherein:
FIG. 1 is a back view of an essential part of a scooter provided with an antitheft apparatus for motorcycles according to a first embodiment,
FIG. 2 is a side view of an essential part of the scooter provided with an antitheft apparatus for motorcycles,
FIG. 3 is a back view in the state of the vehicle body covers and others being removed,
FIG. 4 is a side view in the state of the vehicle body covers and others being removed,
FIG. 5 is a side view of an essential part of the scooter provided with an antitheft apparatus according to a second embodiment,
FIG. 6 is a back view of the main switch portion of the scooter,
FIG. 7 includes enlarged views of the area where the protection member is attached,
FIG. 8 includes views for explaining the action of the protection member,
FIG. 9 shows the section IX-IX of FIG. 8(a),
FIG. 10 is a plan view of a unit swing type of engine,
FIG. 11 is a side view of a lock mechanism in the rear part of the unit swing type of engine,
FIG. 12 shows the cross the section XII-XII of FIG. 11,
FIG. 13 includes views for explaining the action of the lock lever of the lock mechanism,
FIG. 14 shows another form of embodying the antitheft apparatus for motorcycles according to a third embodiment,
FIG. 15 is a plan view of an engine of unit swing type provided with the antitheft apparatus, according to a further embodiment not forming part of the present invention,
FIG. 16 is a side view of the engine of unit swing type provided with the antitheft apparatus, of Fig. 15,
FIG.17 is an enlarged side view of an essential part of the same engine of Fig. 15,
FIG.18 shows a cross section along the line IV-IV in FIG. 17,
FIG.19 is a perspective view of the operation lever, of Fig. 18, and
FIG. 20 shows the operation lever of Fig. 18.

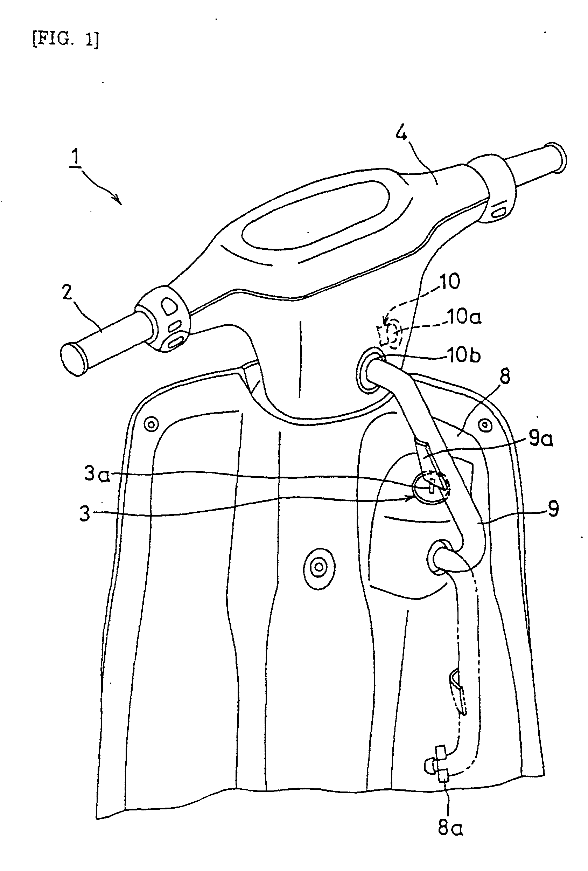

A first embodiment of an antitheft apparatus for motorcycles will be hereinafter described in detail in reference to FIGs. 1 through 4.

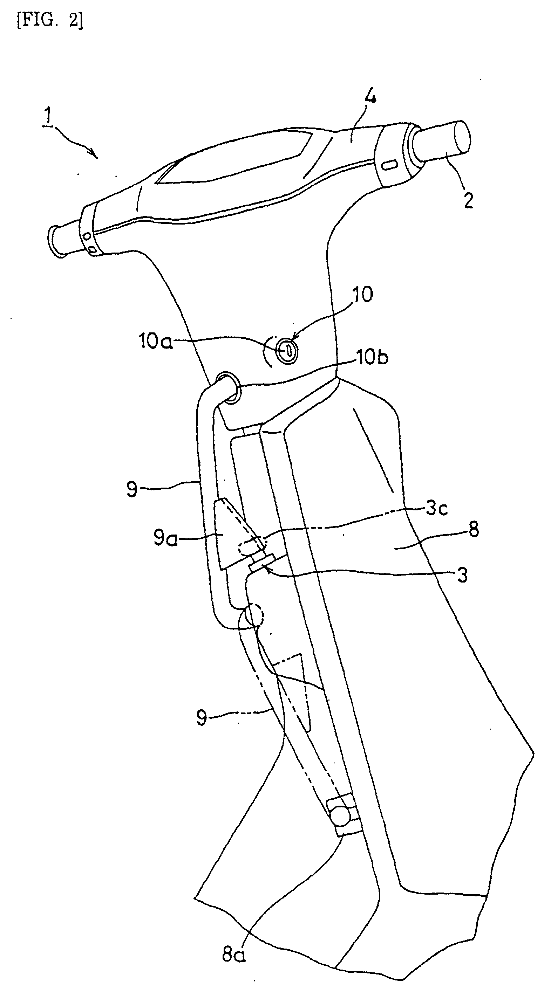

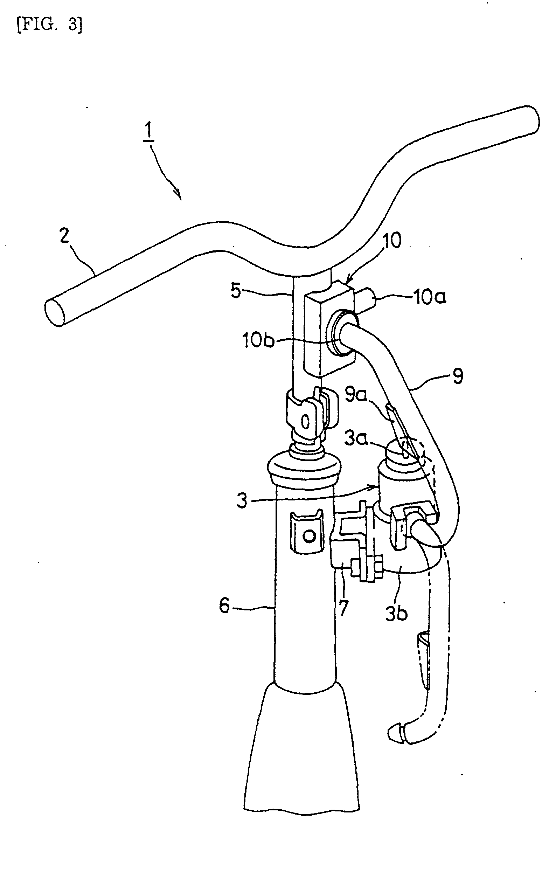

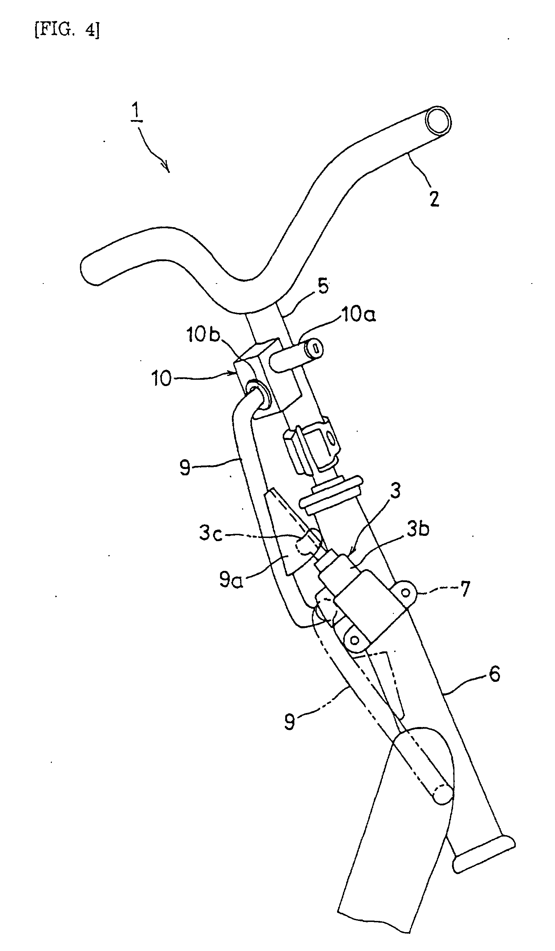

FIG. 1 is a back view of an essential part of a scooter provided with an antitheft apparatus for motorcycles according to this embodiment. FIG 2 is a side view of the same part. FIG. 3 is a back view with the vehicle body covers or the like being removed. FIG. 4 is a side view in the same state.

In these figures, the symbols 1 denotes a scooter of this embodiment, the symbol 2 denotes steering handlebars of the scooter 1, and the symbol 3 denotes a main switch. The steering handlebars 2 are covered with a handlebar cover 4 and supported for free rotation through a steering shaft portion, indicated with a reference number 5 in FIGS. 3 and 4, on a head pipe 6.

The main switch 3 is mounted through a bracket 7 on the head pipe 6 and entirely covered with a leg shield 8 (vehicle body cover) except for the keyhole 3a and the portion around the keyhole 3a. The main switch 3 is tilted relative to the head pipe 6 so that the axis line of the key cylinder portion 3b is directed rear-upward.

On the portion, facing the rear of the vehicle, of the key cylinder portion 3b is pivoted one end of a protection member 9 made of a U-shaped metallic bar. The protection member 9 passes through the leg shield 8 and is connected to the key cylinder portion 3b so as to be freely swung about the pivot portion (ball joint) outside the leg shield 8. As shown in solid lines in the figure, the other end of the protection member 9 is arranged to be engage-stopped with a lock device 10 of a steering shaft portion 5 when the protection member 9 is turned to the upright position so as to cover the keyhole 3a of the main switch 3 from the above.

Furthermore, the protection member 9 is provided with a projection 9a for approaching and lying over the keyhole 3a when the protection member 9 is set to the upright position. The projection is formed as shown in FIGS. 2 and 4 to face the keyhole 3a at a distance smaller than the projecting size of the key 3c inserted into the keyhole 3a when one end of the protection member 9 is engaged with the lock device 10.

In the following description, the term protecting position refers to the position of the protection member 9 brought to the upright position as described above so that the projection 9a lies over the keyhole 3a. Also, as shown with the phantom lines in the figure, the position of the protection member 9 moved away from above the keyhole 3a so that the key 3c may be inserted into the keyhole 3a is referred to as the open position in the following description. By the way, the protection member 9 placed in the open position is arranged to be accommodated in this position by the engaging with a hook 8a (Refer to FIGS. 1 and 2) formed integrally with the leg shield 8.

The lock device 10 is constituted with a key cylinder 10a secured to the steering shaft portion 5 and having a keyhole, and with an engaging port 10b into which the other end of the protection member 9 is to be inserted. When the other end of the protection member 9 is inserted into the engaging port 10b, the protection member 9 is automatically locked. The locked state may be unlocked by the turning operation of the key. The position for fixing the lock device 10 to the steering shaft portion 5 is set so that the engaging port 10b faces the other end of the protection member 9 in the state of the steering handlebars 2 are steered fully to the left of the vehicle. The lock device 10 is also covered with the handlebar cover 4 except for the keyhole of the key cylinder 10a, the area around the keyhole, and the area around the engaging port 10b.

Since the antitheft apparatus described above for the motorcycle employs, in the vicinity of the main switch 3 on the vehicle body frame side, the protection member 9 which may be freely moved between the position for the protection member approaching and lying over the keyhole 3a of the main switch key 3 and the open position for permitting the key 3c to be inserted into the keyhole 3a, and the lock device 10 for preventing the movement of the protection member 9 placed in the protecting position, the keyhole 3a of the main switch key 3 is covered with the protection member 9 when the protection member 9 is secured to the protecting position, so that a screwdriver or the like cannot be forcibly inserted into the keyhole 3a.

Furthermore, since the protection member 9 cannot be moved to the protecting position in the state of the key 3c being left inserted in the keyhole 3a because the key 3c stands in the way, the key 3c is prevented from being inadvertently left inserted.

Furthermore, when the protection member 9 is placed in the protecting position in which the protection member 9 covers the keyhole 3a of the main switch key 3, the protection member 9 stands out as it extends between the main switch 3 and the steering handlebars 2. As a result, a third person can easily recognize that the antitheft measures is taken. This makes the third person visually recognize that the theft is not easy and give up the theft.

Furthermore, since the other end of the protection member 9 is engaged with the steering handlebars 2, the operation of protecting the keyhole 3a of the main switch 3 locks the turning of the handlebars so that the vehicle is made incapable of being driven. Furthermore, since a constitution is employed that the lock device 10 is secured on the side of the steering handlebars 2 to engage and lock the other end of the protection member 9, the steering handlebars 2 are made to be completely impossible to turn from the protecting position irrespective of the position of the steering handlebars 2 when the protection member 9 is secured to the protecting position, namely irrespective of wherever on the handlebars 2 the lock device 10 is mounted. As a result, the degree of freedom of setting the position of the handlebars 2 is large when they are locked. Furthermore, the structure for locking the handlebars may be simple.

While an example is shown here which the lock device 10 is secured to the handlebars 2, it may also be arranged that, for example, the lock device 10 is disposed on the vehicle body frame side, only to restrict the turning of the steering handlebars within a specified range when the other end of the bar-shaped protection member 9 is brought into contact with the handlebars 2. In that case, however, the position of the steering handlebars 2 at locking is preferably set to the position where the handlebars 2 are turned to the extreme right or left.

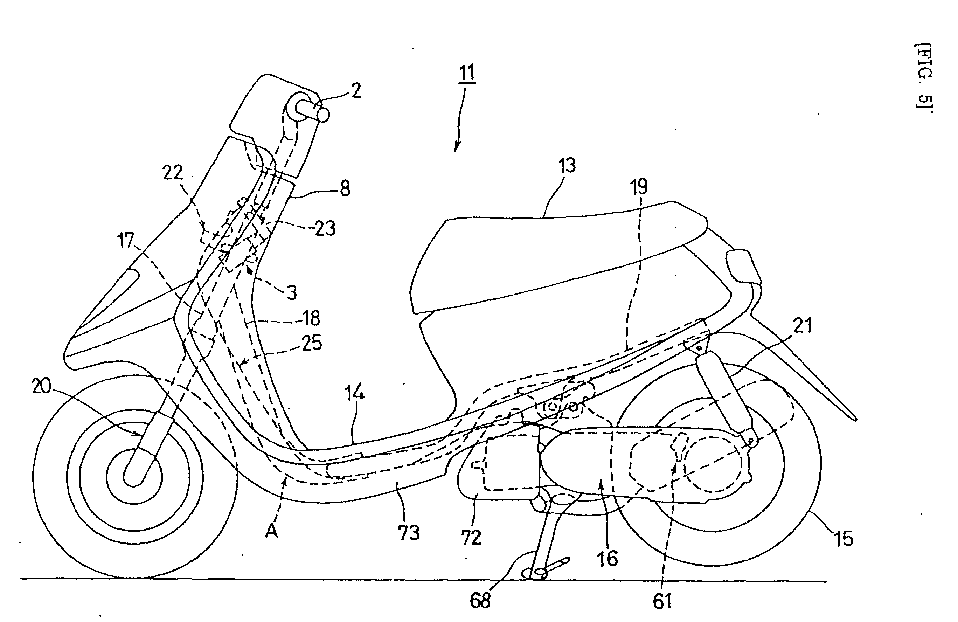

According to a second embodiment, the antitheft apparatus may also be constituted as shown in FIGS. 5 through 13.

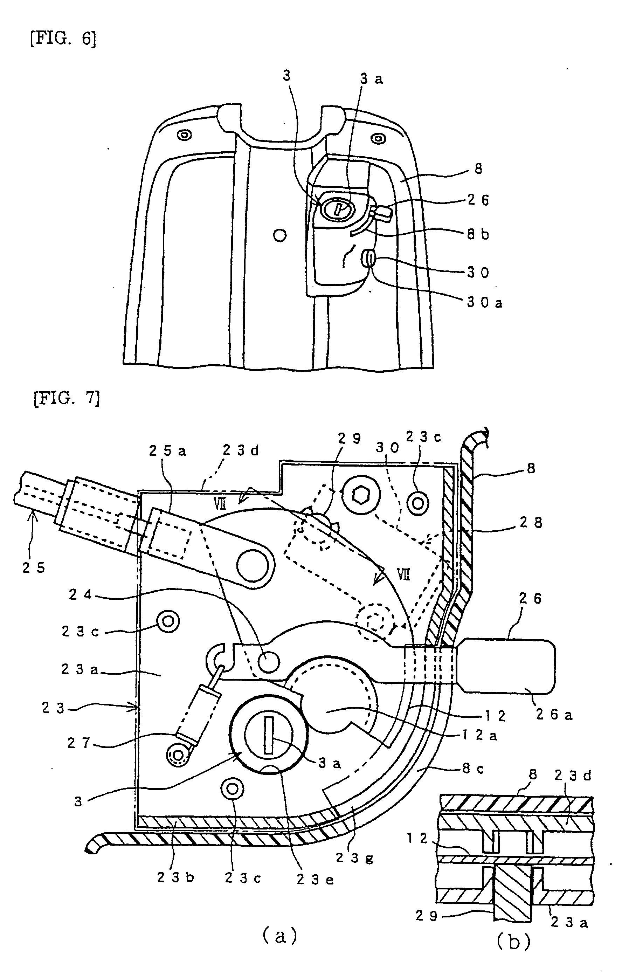

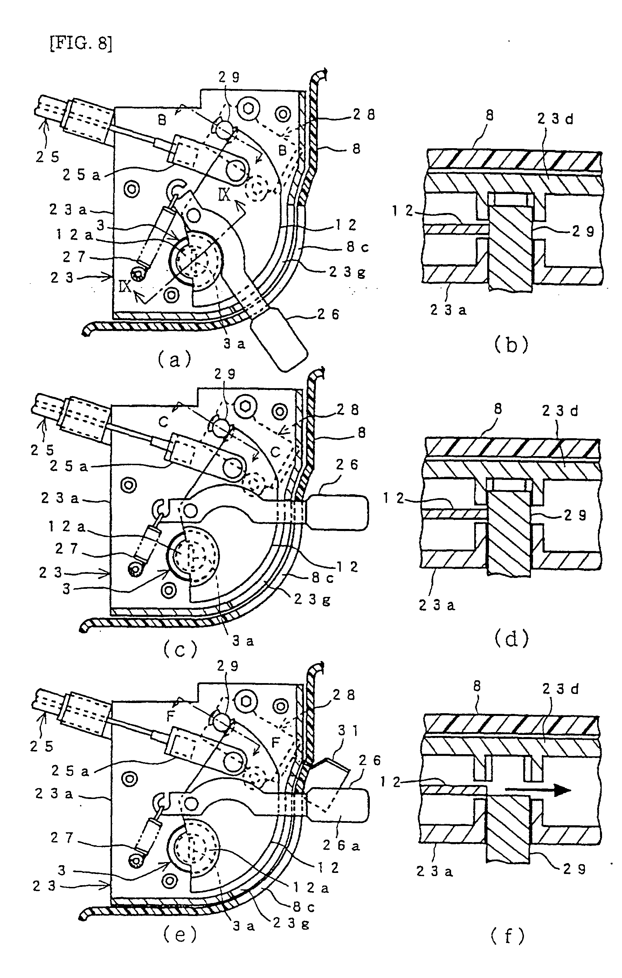

FIG. 5 is a side view of a scooter equipped with the antitheft apparatus of the resent embodiment. FIG. 6 is a back view of the main switch portion of the scooter. FIG. 7 includes an enlarged cross-sectional views of the area where the protection member is mounted, in which FIG. 7(a) is a plan view, and FIG. 7(b) is a cross-sectional view taken along the line VII-VII in FIG. 7(a). By the way, FIG. 7(a) is shown with the leg shield broken away. FIG. 8 includes cross-sectional views for explaining the actions of the protection member, in which FIG. 8(a) is a plan view of the state that the operation lever is operated to secure the protection member to the protecting position, FIG. 8(b) is a cross-sectional view taken along the line B-B in FIG. 8(a), FIG. 8(c) is a plan view of the state that the operation lever has returned to the initial position, FIG. 8(d) shows the cross section D-D of FIG. 8(c), FIG. 8(e) is a plan view of the state in which the lock device is operated to be unlocked, and FIG. 8(f) shows the cross section F-F of FIG. 8(e).

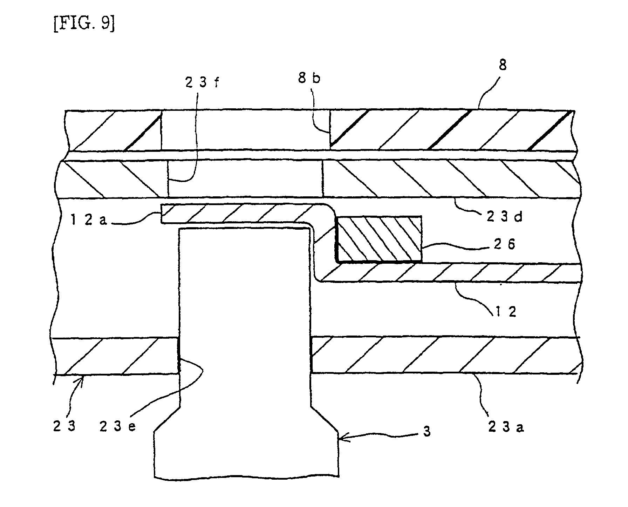

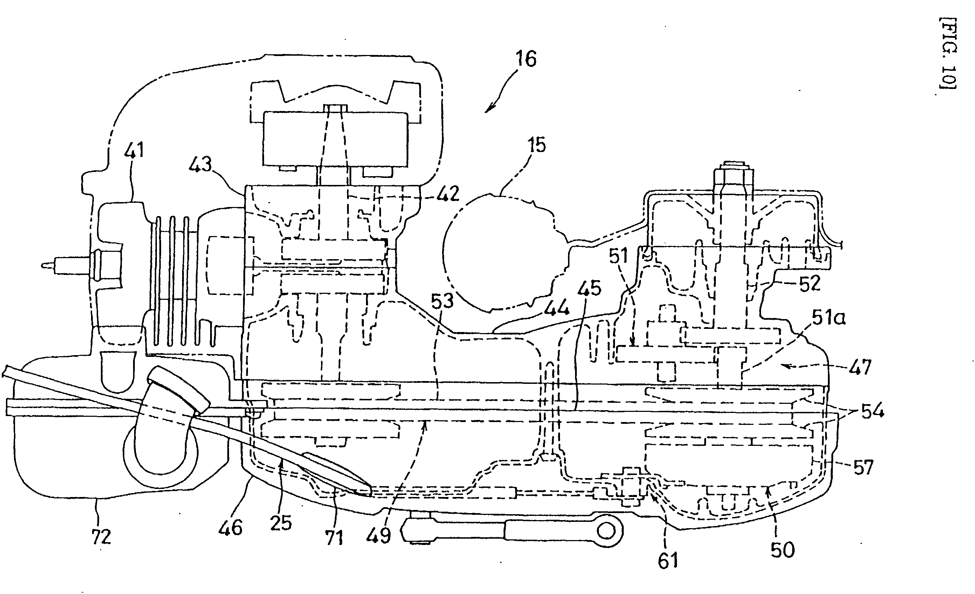

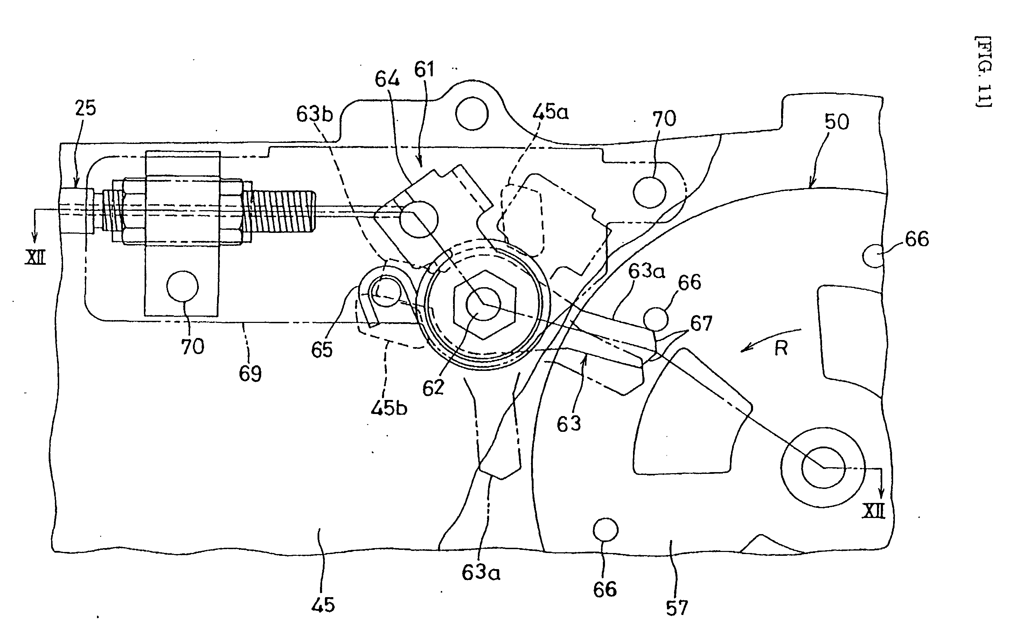

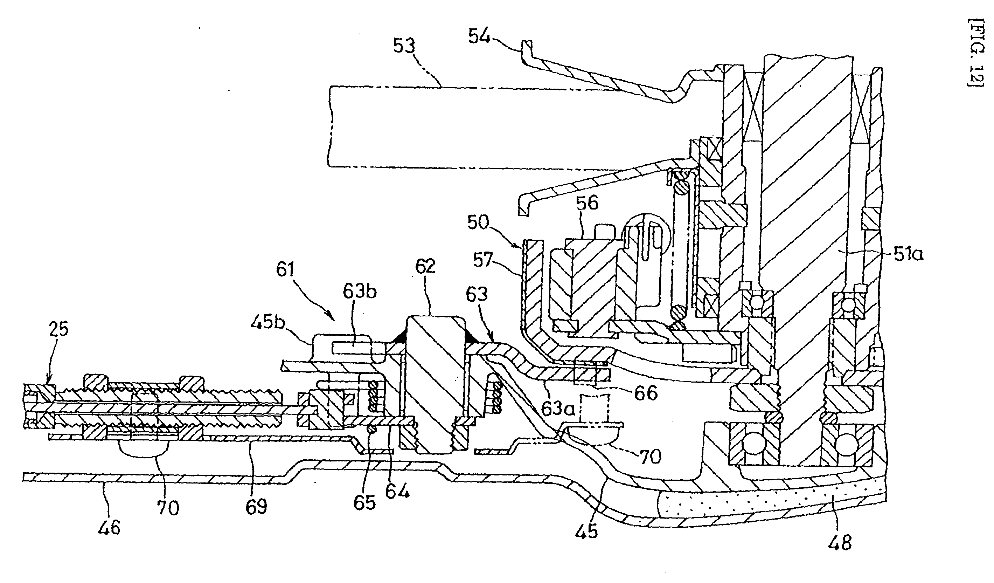

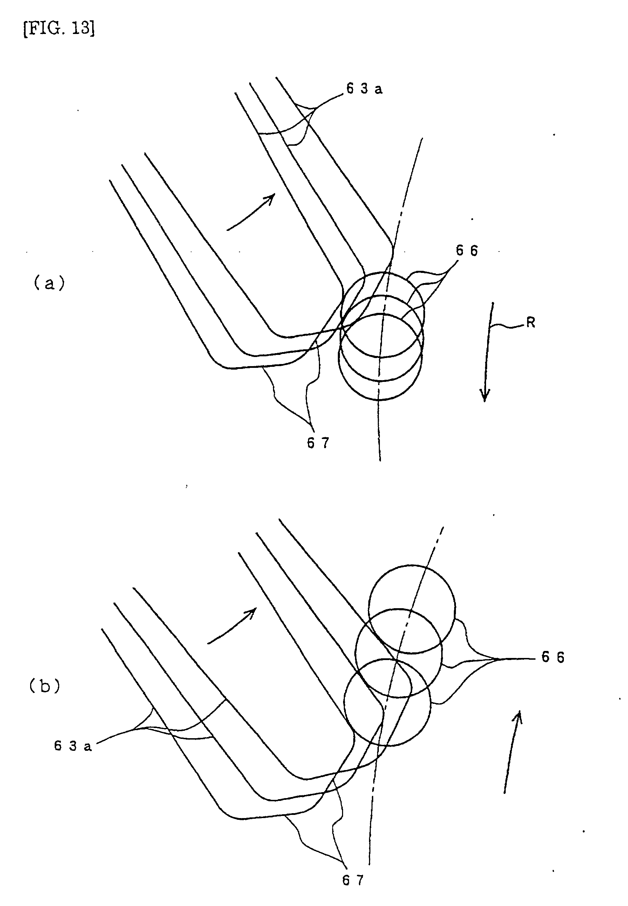

FIG. 9 shows the cross section IX-IX of FIG. 8(a). FIG. 10 is a plan view of a unit swing type of engine. FIG. 11 is a side view of a lock mechanism in the rear part of the unit swing type of engine. FIG. 12 shows the cross section XII-XII of FIG. 11. FIG. 13 includes views for explaining the actions of the lock lever of the lock mechanism, in which FIG. 13(a) shows the manner that an outer circumferential cylindrical body of a centrifugal clutch turns in the forward direction at the time of locking. FIG. 13(b) shows the manner that the outer circumferential cylindrical body of the centrifugal clutch turns in the reverse direction at the time of locking. In these figures, members similar or equivalent to those in FIGS. 1 through 4 are provided with the same symbols and detailed explanation will be omitted.

The antitheft apparatus of this embodiment employs a constitution that the main switch 3 of the scooter 11 shown in FIG. 5 is protected as shown in FIG. 7 with a planar protection member 12 which interlocks with a lock mechanism to be described later so that even the vehicle cannot be moved when the protection member is placed in the protecting position.

The scooter 11 of this embodiment comprises a low-height foot-board 14 between the handlebars 2 and a seat 13, and a unit swing type of engine 16 below the seat 13 to support a rear wheel 15. In FIG. 5 is shown a vehicle body frame (A) comprising a head pipe 17, a down tube 18 extending from the head pipe 17 obliquely rear downward, and paired right and left rear pipes 19 extending from the rear end of the down tube 18 below the seat 13. A front fork 20 and steering handlebars 2 are supported for free steering on the head pipe 17. The unit swing type of engine 16 is connected for free vertical swinging to the rear pipes 19 through a link mechanism. A cushion unit 21 is interposed between the rear end of the unit swing type of engine 16 and the rear pipes 19.

As shown in FIG. 7, the protection member 12 is made of a metallic plate in a sector shape and mounted for free rotation through a support shaft 24 on a support plate 23a of a unit case 23 fixed together with the main switch 3 to a bracket 22 (Refer to FIG. 5) secured to the head pipe 17. The unit case 23 formed by aluminium die-casting comprises the support plate 23a, a vertical wall 23b, and a cover member 23d of approximately the same shape as that of the support plate 23a and placed on three screw bosses 23c of the support plate 23a and on the vertical wall 23b, and secured with screws.

The support shaft 24 is positioned in the center of the sector-shaped protection member 12 and nearer to the front of the vehicle than the main switch 3. The support plate 23a has an opening 23e with which the portion around the keyhole 3a of the main switch 3 engages so that the keyhole 3a of the main switch 3 is exposed above the top surface of the support plate 23a. The keyhole 3a of the main switch 3 also faces openings 8b and 23f respectively formed in the leg shield 8 and the cover member 23d.

At one end of the protection member 12 is formed a mask portion 12a for covering the keyhole 3a of the main switch 3 from above. The other end of the protection member 12 is connected to a wire 25 for operating the lock mechanism which will be described later. The wire 25 has an outer sheath with its fore-end engaging with the support plate 23a, and an inner wire with its fore-end connected to a connection member 25a pivotably mounted on the protection member 12. By the way, the inner wire of the wire 25 is always subject to a constant tension by means of the lock mechanism which will be described later. That is to say, the protection member 12 is urged counterclockwise in FIG. 7 by connecting of the inner wire to the protection member 12.

As shown in FIG. 9, the mask portion 12a is formed by bulging upwardly part of one end of the protection member 12. As the mask portion 12a is displaced upward in this way, the main switch 3 may be mounted at a position elevated by such a displacement, and the key may be shortened accordingly.
In this form of the embodiment, the position of the protection member 12 with the mask portion 12a covering the main switch 3 from above as shown in FIG. 8(a) is referred to as the protecting position, and the position of the protection member 12 pulled with the wire 25 so that the keyhole 3a is exposed as shown in FIG. 7(a) is referred to as the open position.

In order to move the protection member 12 from the open position to the protecting position shown in FIG. 7(a), an operation lever 26 shown in FIG. 7(a) is used. The operation lever 26 is supported for rotation about the support shaft 24 on the support plate 23a, passes through an elongate opening 23g formed in the elevated wall 23b of the unit case 23 and also passes through an elongate opening 8c formed to correspond to the elongate opening 23g, with its one end having a knob 26a extending to the outside of the leg shield 8. A return tension coil spring 27 is interposed between the other end, located inside the leg shield 8, of the operation lever 26 and the support plate 23a so as to urge the operation lever 26 counterclockwise in FIG. 7(a).

Also, the portion of the operation lever 26 positioned between the support shaft 24 and the elongate opening 23g formed in the elevated wall 23b of the unit case 23 is formed in an arcuate shape so as to fit on the outer circumferential wall of the mask portion 12a of the protection member 12 from the opposite side of the main switch 3.
In FIG. 7(a), the component indicated with the symbol 28 and disposed on the reverse side of the support plate 23a is a lock device for holding the protection member 12 in the protecting position. The lock device 28 has a stopper 29 urged with a spring to project above the support plate 23a and a key cylinder 30 (Refer to FIG. 6) for retracting the stopper 29, and is secured to the support plate 23a. By the way, the keyhole portion 30a of the key cylinder 30 is exposed outside the leg shield 8.

The stopper 29 is positioned so that it overlaps the protection member 12 when the protection member 12 is placed in the open position as shown in FIG. 7(a) of a plan view and that it pops up and engages with an end of the protection member 12 when the protection member 12 is placed in the protecting position as shown in FIG. 8(a) of a plan view.

According to the antitheft apparatus configured as described above, the keyhole 3a of the main switch 3 may be covered with the protection member 12 by drawing out the key from the main switch 3 and rotating the operation lever 26 clockwise as seen in FIG. 7(a). That is to say, by rotating the operation lever 26 clockwise against the tension of the coil spring 27 and the tension working on the wire 25 in the state of engaging with the outer circumferential wall of the mask portion 12a of the protection member 12, the protection member 12 is rotated in the same direction and positioned in the protecting position in which the mask portion 12a covers the keyhole 3a as shown in FIG. 8 (a).

When the protection member 12 is placed in the protecting position, the stopper 29 of the lock device 28 comes off the underside of the protection member 12 as shown in FIG. 8(b) and is projected above the protection member 12 by the spring force. In this way, as the stopper 29 projects, the protection member 12 cannot return to the open position shown in FIG. 7(a), and is held at the protecting position.

After that, when the operator's hand is removed from the operation lever 26, the operation lever 26 is rotated counterclockwise with the tension of the tension coil spring 27 until it comes into contact with one end of the elongate opening 23g formed in the elevated wall 23b of the unit case 23, namely until it comes to the initial position as shown in FIG. 8(c).

Thus, since a screwdriver or the like cannot be forced into the keyhole 3a of the main switch 3 when the key hole 3a is covered with the protection member 12, the main switch 3 is prevented from being destroyed.

In order to enable a key 31 to be inserted into the keyhole 3a, the key 31 is inserted into the key cylinder 30 of the lock device 28 as shown in FIG. 8(e) and the stopper 29 is then lowered. That is to say, when the stopper 29 is lowered as shown in FIG. 8(f), the protection member 12 is rotated counterclockwise with the tension of the wire 25 until the outer circumferential wall of the mask portion 12a contacts the arcuate portion of the operation lever 26 in FIG. 8(e), and positioned at the open position. As a result, the keyhole 3a is exposed so that the key 31 may be inserted into the exposed keyhole 3a.

Therefore, not only that the main switch 3 is protected with the protection member 12 but also that the supporting portions of the operation lever 26 and the protection member 12 are protected against being destroyed by a third person because those portions are covered with the unit case 23 and the leg shield 8.

Furthermore, the operation lever 26 functions only when the protection member 12 is rotated from the open position to the protecting position, and once the protection member 12 is positioned at the protecting position, its engagement is released. Accordingly, even if the third person operates the operation lever 26 exposed outside the leg shield 8 in the state of the main switch 3 being protected with the protection member 12, the protection member 12 cannot be rotated to the open position. Therefore, the main switch 3 is securely protected.

Now, the lock mechanism coupled through the wire 25 to the protection member 12 will be described in detail.
The lock mechanism is configured to stop the rotation of the rear wheel 15 of the engine 16 of a unit swing type shown in FIG. 5.
The unit swing type engine 16 is provided as shown in FIG. 10 with a crankcase 43 supporting a cylinder 41 and a crankshaft 42, a transmission case main part 44 integrally formed with the crankcase 43, a transmission case cover 45 attached to a side of the transmission case main part 44, and a silencing cover 46 covering the transmission case cover 45. The crankcase 43 is pivoted for free vertical swinging through a link mechanism on the rear pipes 19 of the vehicle body frame (A). By the way, a silencing material 48 is interposed between the silencing cover 46 and the transmission case cover 45.

The transmission case main part 44 is formed to be open to the left of the vehicle body and extend toward the rear of the vehicle body, and constitutes the transmission case of the unit swing type engine 16 together with the transmission case cover 45. A transmission device 47 for transmitting the rotation of the crankshaft 42 to the rear wheel 15 is housed in the transmission case. The lower end portion of the cushion unit 21 is pivoted at the rear end portion of the transmission case.

The transmission device 47, as shown in FIG. 10, is constituted with a continuously variable transmission (CVT) 49 of a V-belt type, a centrifugal clutch 50, a geared speed reduction unit 51, and a wheel axle 52 for attaching the rear wheel 15.
The CVT 49 of a V-belt type is of a conventional type in which the rotation of the crankshaft 42 is transmitted through a V-belt 53 to a driven pulley 54.

The centrifugal clutch 50 as shown in FIG. 12 is constituted such that centrifugal rollers 56 rotate together with the driven pulley 54 and come into pressing contact with the inside circumferential surface of an outer circumferential cylindrical member 57 due to a centrifugal force when the rotation speed reaches a specified value. The axial central portion of the outer circumferential cylindrical member 57 is coupled to the input shaft 51a of the geared speed reduction unit 51. The geared speed reduction unit 51 is constituted such that the rotation of the input shaft 51a is reduced at two locations and transmitted to the wheel axle 52.

In the rear wheel drive system configured as described above, components disposed between the outer circumferential cylindrical member 57 of the centrifugal clutch 50 and the wheel shaft 52 interlock and rotate together with the rotation of the rear wheel 15 even when the centrifugal clutch 50 is disengaged. At this time, the outer circumferential cylindrical member 57 rotates the fastest among the components rotating together with the rear wheel 15.

The lock mechanism which interlocks the protection member 12 is arranged to stop the rotation of the outer circumferential cylindrical member 57. The lock mechanism is shown with the symbol 61 in the figure. The lock mechanism 61 is constituted with components including; a support shaft 62 disposed for free rotation in the upper part of the rear outside surface of the transmission case cover 45, a lock lever 63 welded to one end, inward of the cover 46, of the support shaft 62, a wire connection arm 64 secured to the other end of the support shaft 62 and connected to the rear end of the inner wire of the wire 25, and a return spring 65 resiliently installed between the arm 64 and the transmission case cover 45 to urge clockwise the arm 64, the support shaft 62 and the lock lever 63 as shown in FIG. 11.

The support shaft 62 passes through the transmission case cover 45 and is supported for free rotation on the transmission case cover 45, with its axial line direction being parallel to the axial lines of the outer circumferential cylindrical member 57 and the wheel shaft 52.
The lock lever 63 has an engaging piece 63a extending from the support shaft 62 toward the outer circumferential cylindrical member 57 and a claw piece 63b extending on the opposite side of the engaging piece 63a. When the lock lever 63 rotates clockwise as seen in FIG. 11, the claw piece 63b contacts a projection 45a on the rear inside surface of the transmission case cover 45, and at the same time, the engaging piece 63a is positioned nearer to the front of the vehicle than the outer circumferential cylindrical member 57. When the lock lever 63 rotates in the opposite direction, the claw piece 63b contacts a projection 45a on the front side of the transmission case cover 45, and at the same time, the engaging piece 63a is positioned on the left of the vehicle body and laps the outer circumferential cylindrical body as seen in side view.

This embodiment is arranged such that, when the lock lever 63 is rotated counterclockwise in FIG. 11, the engaging piece 63a faces the inside of the movement locus of the pin 66 erected on the end surface on the left side, with respect to the vehicle body, of the outer circumferential cylindrical body 57. In this way, when the engaging piece 63a comes inside the movement locus, the engaging piece 63a engages from the front of the rotating direction of the outer circumferential cylindrical body 57. By the way, the term rotating direction as used herein refers to the direction in which the outer circumferential cylindrical body 57 rotates when the rear wheel 15 is rotated for the vehicle body to move forward. This rotating direction is indicated with an arrow R in FIG. 11.
The pin or a plural number of pins 66 are made to project in a cylindrical shape by press-forming part of the end surface of the outer circumferential cylindrical body 57 and equally spaced in the circumferential direction of the outer circumferential cylindrical body 57.

That is to say, as the engaging piece 63a comes inside the movement locus of the pin 66, the pin 66 contacts the engaging piece 63a when the outer circumferential cylindrical body 57 rotates in either forward or reverse direction, and further rotation is prevented. By the way, a cam surface 67 as shown in FIGS. 11 and 13 is formed at the fore-end of the engaging piece 63a so that the engaging piece 63a may move smoothly to the inside of the movement locus even if the pin 66 is at the fore-end of the engaging piece 63a.

The cam surface 67 is sloped so that the width of the engaging piece 63a decreases toward its fore-end and that the pin 66 comes into sliding contact with the cam surface 67 to be pushed downward when the pin 66 in a position forward of the moving engaging piece 63a strikes the cam surface 67. Also, as shown in FIG. 13(b), the pin 66 is pushed upward by the movement of the engaging piece 63a when the pin 66 strikes the side surface of the engaging piece 63a. By the way, the pin 66 may be pushed down as shown in FIG. 13(a) with the cam surface 67 only when the vehicle is parked using the main stand 68 as shown in FIG. 5.

As shown in FIGS. 11 and 12, a sheet metal cover 69 is disposed outside the wire connection arm 64 to prevent the lock mechanism 61 from being destroyed by a third person. The cover 69 is formed to cover the entire range of rotation of the wire connection arm 64 from the point where the rear end of the sheath of the wire 25 is held and secured to the outside surface of the transmission case cover 45 using two, front and rear attachment bolts 70.

The wire 25 with its rear end coupled to the wire connection arm 64 is connected to the protection member 12 on the main switch 3 side, through the space between the transmission case cover 45 and the silencing cover 46, an opening 71 formed in the front end part of the silencing cover 46 as shown in FIG. 10, the space above an air cleaner 72, and inside of the vehicle body cover 73 as shown in FIG. 5.

According to the lock mechanism 61 configured as described above, the rear wheel may be locked by rotating the operation lever 26 on the main switch 3 side clockwise from the position shown in FIG. 7(a) to the position shown in FIG. 8(a) when the vehicle is in the upright attitude using the main stand 68 as shown in FIG. 5. In other words, when the operation lever 26 is operated as described above, the protection member 12 rotates in the same direction so that its mask portion 12a covers the keyhole 3a of the main switch 3. At the same time, the lock lever 63 of the lock mechanism 61 rotates counterclockwise in FIG. 11 as the inner wire of the wire 25 is tensed, and the engaging piece 63a comes inside the movement locus of the pin 66.

When the outer circumferential cylindrical body 57 of the centrifugal clutch 50 rotates together with the rear wheel 15 as the vehicle is moved forward or reverse in the state that the engaging piece 63a has moved as described above, the pin 66 of the outer circumferential cylindrical body 57 strikes the engaging piece 63a. As a result, the rear wheel 15 is locked.

Therefore, in the state described above, a screwdriver or the like cannot be forced into the keyhole 3a of the main switch 3 because the keyhole 3a is covered with the protection member 12, and further, the lock mechanism 61 is set to the locked state so that the rear wheel 15 cannot be rotated. In other words, theft is prevented in terms of both the protection of the keyhole 3a and locking the vehicle body.
By the way, even in the case the vehicle body is held upright using the side stand (not shown) instead of the main stand 68, the lock mechanism 61 may be set to the locked state. In that case, if the engaging piece 63a contacts the pin 66 of the centrifugal clutch 50 when the lock lever 63 moves, although the lock lever 63 cannot be rotated more than that, because the rear wheel 15 is in contact with the ground, the position of the pin 66 may be shifted by slightly moving the vehicle body toward front or rear.

When the lock device 28 on the main switch 3 side is unlocked, the movement restriction at the fore-end of the inner wire of the wire 25 is released, the protection member 12 rotates to the open position, the lock lever 63 of the lock mechanism 63 rotates clockwise in FIG. 11, and the engaging piece 63a of the lock lever 63 moves more toward the front of the vehicle than the outer circumferential cylindrical body 57 of the centrifugal clutch 50. With this action of the lock lever 63, the lock mechanism 61 is brought to unlocked state so that the scooter may be driven.

Therefore, with the antitheft apparatus configured as described above, dual theft prevention measures are taken by very simple operations because the rear wheel 15 may be locked by the protecting operation for the key hole 3a of the main switch 3.

In this embodiment the rotation axis line of the lock lever 63 is made parallel to the axis line of the rear wheel 15, and the engaging piece 63a engages with the pin 66 of the outer circumferential cylindrical body 57 of the centrifugal clutch 50 from the front side of the rotating direction of the outer circumferential cylindrical body 57. As a result, rigidity of the lock lever 63, the support shaft 62 supporting the lock lever 63, and the transmission case cover 45 may be low. The reason for the above fact is that, because the outer circumferential cylindrical body 57 has the largest diameter and rotates at the highest speed among the components rotating together with the rear wheel 15, the force required to stop the rotation of the outer circumferential cylindrical body 57 may be smaller than that required to stop the rotation of other rotating components.

Furthermore, even if the inner wire is broken, the engaging piece 63a is repelled forward of the rotating direction of the outer circumferential cylindrical body 57 and accordingly no problem occurs in the running of the vehicle.

While this second embodiment is described as the lock mechanism 61 constituted to stop the rotation of the rear wheel 15, the lock mechanism coupled to the protection member 12 may also employ a configuration in which the main stand is held in the upright state when locked.

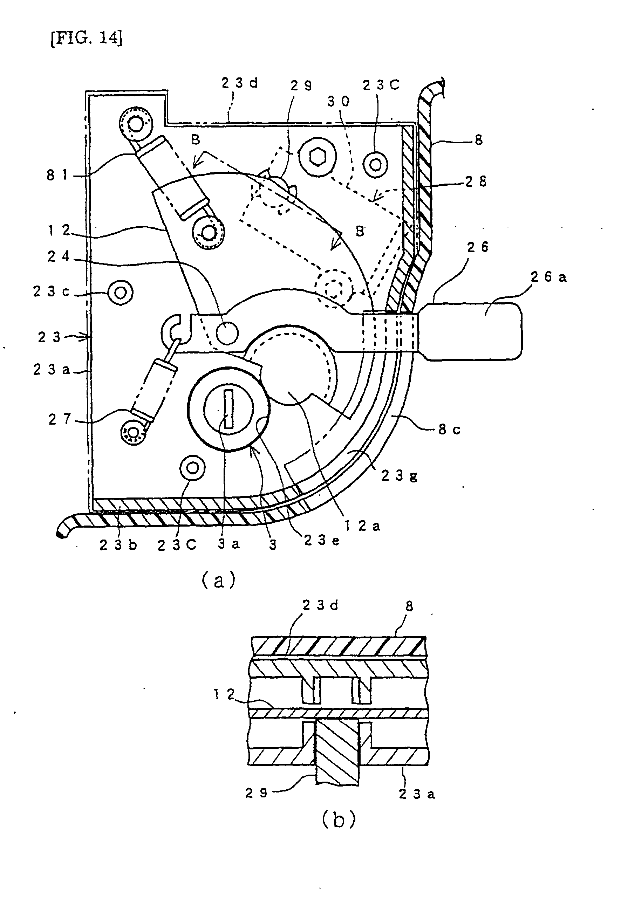

According to a third embodiment, in order to protect the keyhole of the main switch, a constitution shown in FIG. 14 may be employed.

FIG. 14 is a view showing another embodiment of an antitheft apparatus for motorcycles according to this embodiment, in which FIG. 14(a) is an enlarged plan view of the area where the protection member is mounted, and FIG. 14(b) shows the cross section along the line B-B in FIG. 14(a). In the figures, components that are the same as or equivalent to those explained in reference to FIGS. 1 through 13 are provided with the same symbols and their detailed description is omitted.

The protection member 12 shown in FIG. 14 is provided with a tension coil spring 81 for returning action interposed between an end opposite the main switch 3 and the support plate 23a of the unit case 23. The tension coil spring 81 urges the protection member 12 in the counterclockwise direction in FIG. 14. By the way, this protection member 12, unlike in the second embodiment, is not coupled to the lock mechanism.

In the antitheft apparatus configured as described above, the key hole 3a of the main switch 3 is covered and protected with the protection member 12 when the operation lever 26 is rotated clockwise from the open position shown in FIG. 14 against the tension forces of the tension coil springs 27 and 28. When the protection member 12 rotates to the protecting position where the protection member 12 covers the keyhole 3a, the stopper 29 of the lock device 28 pops up, and the protection member 12 is held at the protecting position.

When the operator's hand is removed in this state, the operation lever 26 rotates due to the tension force of the coil spring 27 until it strikes one end of the elongate opening 23g of the elevated wall 23b of the unit case 23, namely returns to the initial position. In order to enable a key (not shown) to be inserted into the keyhole 3a, it suffices to unlock the lock device 28 using the key. At this time, the tension of the tension coil spring 81 causes the protection member 12 to return to the open position shown in FIG. 14(a).

As a result, not only the main switch 3 is protected with the protection member 12 but also the supporting portions for the protection member 12 and the operation lever 26 are prevented from being destroyed by a third person because those portions are covered with the unit case 23 and the leg shield 8.
Furthermore, when the protection member 12 is rotated by hand to the protecting position and the hand is removed, the tension force of the tension coil spring 27 causes the operation lever 26 alone to return to the initial position. This means that, even if the third person moves the operation lever 26 exposed outside the leg shield 8 in the state of the main switch 3 being protected with the protection member 12, the protection member 12 cannot be rotated to the open position, and that the main switch 3 is securely protected.

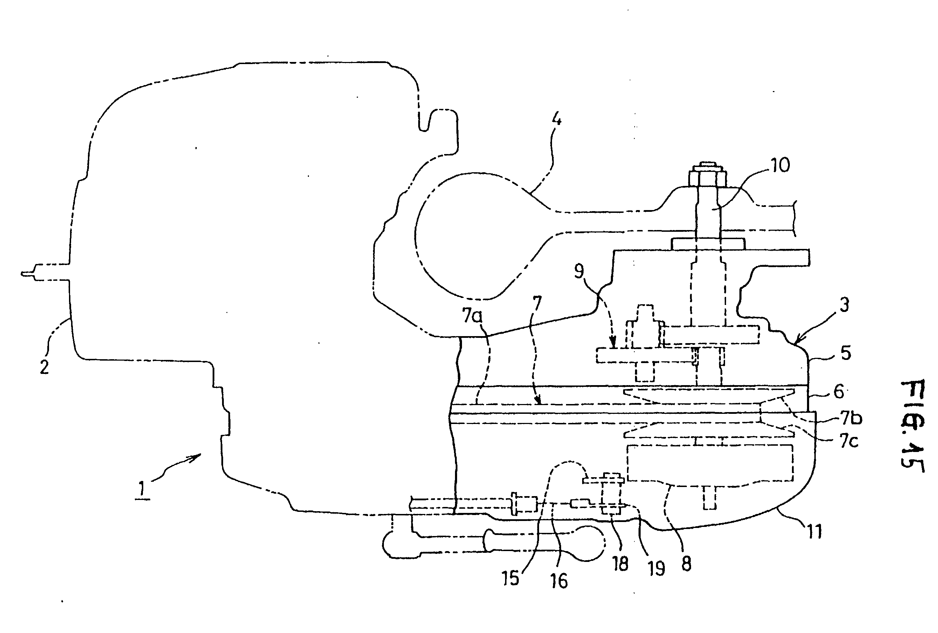

Another embodiment of an antitheft apparatus will be described hereinafter with reference to FIGS. 15 to 20. It should be noted that this embodiment can be combined with any of the aforementioned embodiments. However, it should be noted that the exclusive blocking of the rear wheel without protecting the main switch does not form part of the present invention.

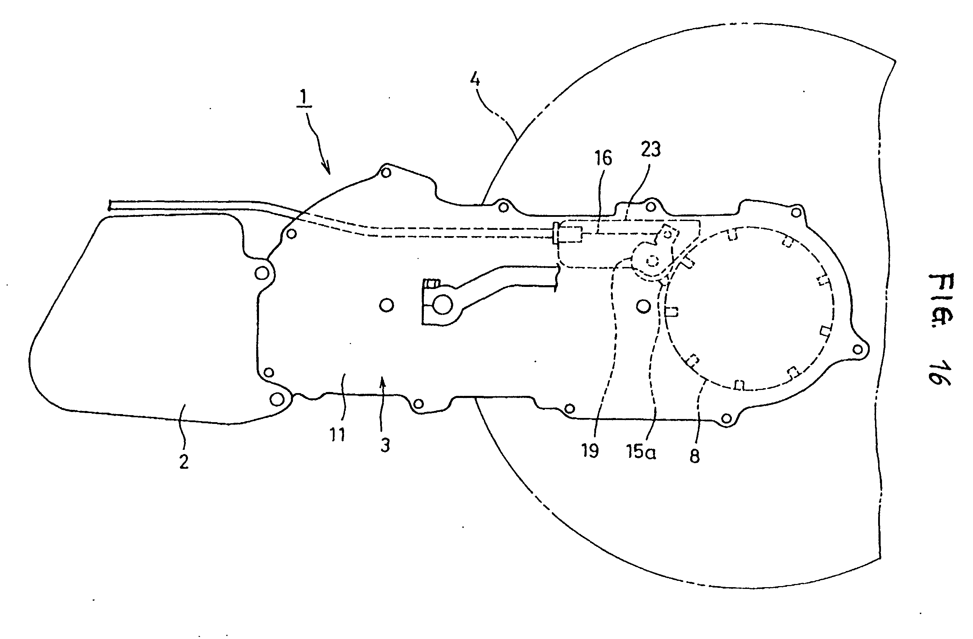

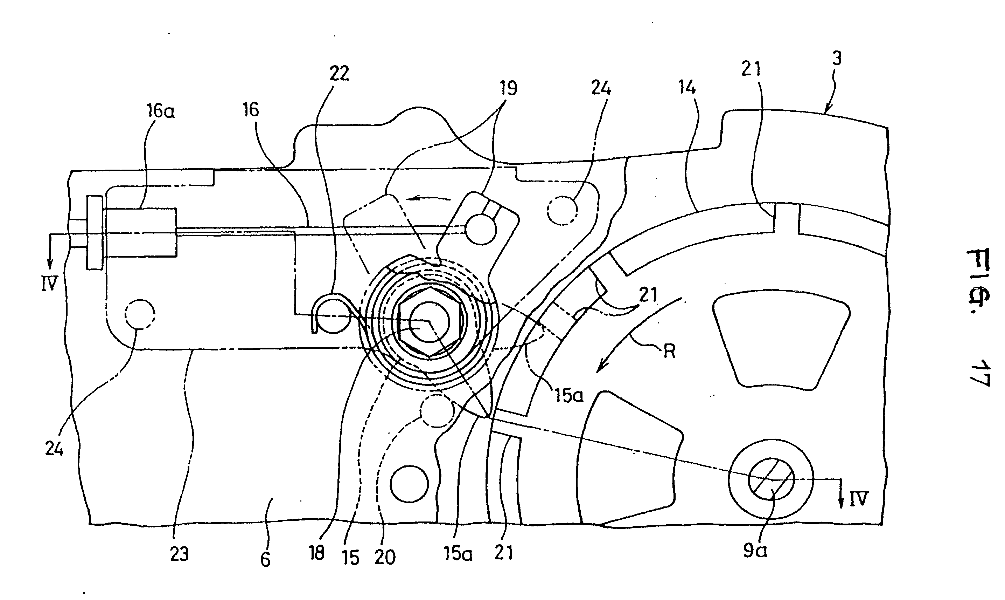

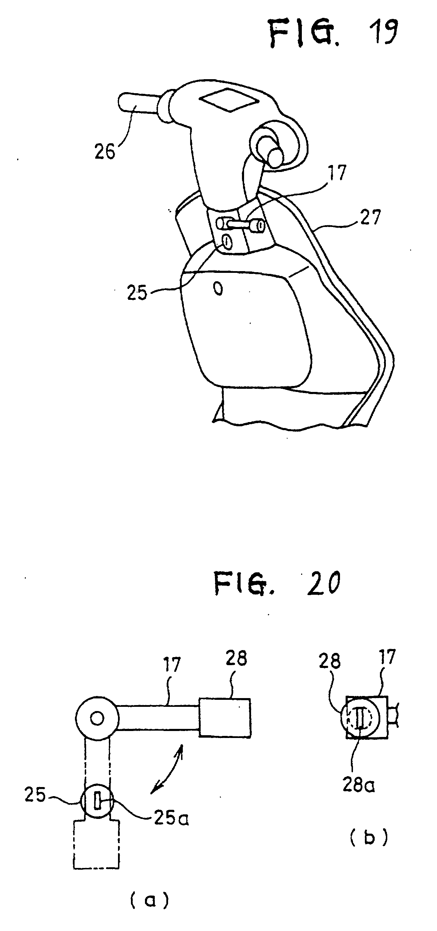

FIG. 15 is a plan view of an engine of unit swing type provided with an antitheft apparatus according to this embodiment. FIG. 16 is a side view of the same engine. FIG. 17 is an enlarged side view of an essential part of the same engine. FIG. 16 shows the cross section along the line IV-IV in FIG. 16. FIG. 19 is a perspective view of an operation lever. FIG. 20 shows the operation lever, FIG. (a) is a front view and FIG. (b) is a side view.

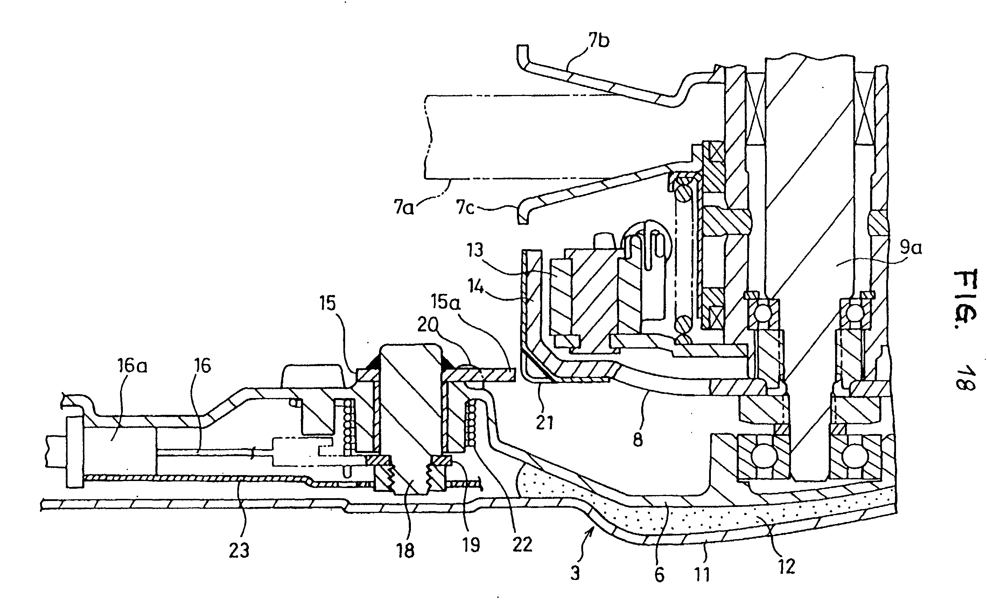

The figures show an engine 1 of unit swing type for motorcycles of scooter type according to said embodiment. The engine 1 of unit swing type has a transmission case 3 extending from one end, on the left hand with respect to the vehicle, of the engine main part 2 located on the front side of the vehicle, toward the rear of the vehicle, with the transmission case 3 supporting the rear wheel 4 for free rotation. The transmission case 3 is constituted with a right hand case 5 which is open toward the left of the vehicle, and a left hand case 6 covering the opening of the right hand case 5, and encloses a continuously variable transmission (CVT) 7 of a V-belt type, a centrifugal clutch 8, a geared speed reduction unit 9, and a wheel shaft 10 for attaching the rear wheel 4. A silencing cover 11 is attached to the outside of the left hand case 6. A noise absorbing material 12 made of glass wool is interposed between the left hand case 6 and the silencing cover 11 as shown in FIG. 18.

The CVT 7 of V-belt type is of a conventional type in which the rotation of the crankshaft (not shown) of the engine is transmitted through a V-belt 7a to pulleys 7b and 7c located on the rear side. As shown in FIG. 18, the centrifugal clutch 8 is constituted such that the centrifugal rollers 13 come into pressing contact with the inside circumferential surface of the outer circumferential cylindrical member 14 by the centrifugal force produced when the centrifugal rollers 13 rotate together with the rear pulleys 7b and 7c. The input shaft 9a of the geared speed reduction unit 9 is coupled to the axial center portion of the outer circumferential cylindrical member 14. The geared speed reduction unit 9 is constituted such that the rotation of the input shaft 9a is reduced at two locations and transmitted to the wheel shaft 10.

With the rear wheel drive system constituted as described above; when the centrifugal clutch 8 is in the state of disengagement, components of the centrifugal clutch 8 on the side from the outer circumferential cylindrical member 14 toward the wheel shaft 10 rotate together with the rear wheel 4. At this time, of the components rotating together with the rear wheel 4, the outer circumferential cylindrical member 14 rotates the fastest.

The antitheft apparatus of this embodiment is adapted to stop the rotation of the outer circumferential cylindrical member 14 and constituted with components including; a lock lever 15 disposed at a position, on the rear upper side of the vehicle, of the transmission case 3, and an operation lever 17 (shown in FIGs. 19 and 20) connected through an operation wire 16 to the lock lever 15.

The lock lever 15 shown in FIGs. 17 and 18 has an engaging piece 15a projecting toward the outer circumferential cylindrical member 14 and is attached to the left hand case 6 of the transmission case 3 through a support shaft 18. The support shaft 18 is passed through and supported for free rotation on the left hand case 6, with its axis line being parallel to the axis lines of the outer circumferential cylindrical member 14 and the wheel shaft 10. The lock lever 15 is welded to one end, on the right side of the vehicle, of the support shaft 18, while a wire connection arm 19 is secured to the other end, namely the end located outside the left hand case 6, of the support shaft 18.

The engaging piece 15a of the lock lever 15 is formed so that it strikes the stopper 20 of the left hand case 6 when the lock lever 16 is rotated clockwise and that it comes inside the rotation locus of the outer circumferential cylindrical member 14 when the lock lever 15 is rotated from the position where the engaging piece 15a strikes the stopper 20 (hereinafter referred to as the drive permitting position) to the position shown in FIG. 3 with phantom (dash-and-double-dotted) lines (hereinafter referred to as the lock position). The outer circumference edge portion of the outer circumferential cylindrical member 14 is provided with a plurality of projections 21 spaced at equal intervals in the circumferential direction. In other words, the engaging piece 15a engages with the outer circumferential cylindrical member 14 from the forward side of the rotating direction of the outer circumferential cylindrical member 14. By the way, the term rotating direction as used herein refers to the direction in which the outer circumferential cylindrical member 14 rotates when the rear wheel 4 is rotated as the vehicle moves forward. This rotating direction is indicated with the arrow R in FIG. 15.

The wire connection arm 19 is connected to the trailing end of the operation wire 16 and urged in the clockwise direction as seen in FIG. 17 with the resilient force of a return spring 22 shown in FIGs. 17 and 18. That is to say, when the operation wire 16 is not under tension, the support shaft 18, the lock lever 15, and the arm 19 are urged in the clockwise direction with the resilient force of the return spring 22. The rotation of the respective components caused by the urging force is restricted as the engaging piece 15a of the lock lever 15 contacts the stopper 20. When the wire 16 is pulled with an operation lever 17, which will be described later, to rotate the wire connection arm 19 from the position shown with solid lines to the position shown with phantom lines in FIG. 3 against the resilient force of the return spring 22, the engaging piece 15a moves from the drive permitting position to the lock position.

A sheet-metal-made cover 23 is disposed as shown in FIGS. 3 and 4 outside the wire connection arm 19 to prevent the lock mechanism from being destroyed by a third person. The cover 23 is formed to cover the entire area from the portion where the operation wire 16 comes out of the sheath receiver 16a to the full rotation range of the wire connection arm 19 and secured with two, front and rear attachment bolts 24 to the transmission case 3.

The operation lever 17 as shown in FIGs. 19 and 20 is disposed in the vicinity of a main switch 25 of the scooter type of motorcycle. FIG. 5 shows steering handlebars 26 and a leg shield 27. The main switch 25 and the operation lever 17 are disposed in the center, with respect to the vehicle width, of the leg shield 27. The operation lever 17 is rotatably attached to a vehicle body frame (not shown) and adapted to loosen the operation wire 16 when placed in the lateral position extending toward the right side of the vehicle as shown with solid lines in FIG. 20(a), and to stretch the operation wire 16 when placed in the vertical position extending downward as shown with phantom lines in the same figure. It is arranged that the engaging piece 15a of the lock lever 15 is moved to the drive permitting position by loosening the operation wire 16 as described above and that the engaging piece 15a of the lock lever 15 is moved to the lock position by pulling the operation wire 16.

Furthermore, it is arranged that the key hole 25a of the main switch 25 is covered when the operation lever 17 is rotated to the vertical position so that the key (not shown) cannot be inserted. Employing such a constitution makes it impossible to start the engine while the rear wheel is prevented from rotating and also impossible to rotate the operation lever 17 to the vertical position while the vehicle is running.

Furthermore, the operation lever 17 is provided with a lock device 28 for preventing a third person from operating the lever. The lock device 28 is constituted to be locked when the key (not shown) is inserted into the key hole 28a and turned so that the operation lever 17 cannot be rotated from the vertical position to the lateral position.

With the antitheft apparatus for motorcycles of scooter type constituted as described above, when the operation lever 17 is rotated from the lateral position shown in FIG. 19 and FIG.20(a) to the vertical position shown with phantom lines in FIG.20(a), the engaging piece 15a in the transmission case 3 moves to the lock position to come inside the rotation locus of the projections 21 of the centrifugal clutch 8 so that the rotation of the outer circumferential cylindrical member 14 and the rear wheel 4 is restricted to a certain angular range up to the point where the projections 21 contacts the engaging piece. The restriction is removed when the operation lever 17 is rotated to the lateral position shown in FIG.20(a) to move the engaging piece 15a to the drive permitting position.

Therefore, with the antitheft apparatus of this embodiment, since the rear wheel is prevented from rotating, the theft prevention is effected whether the main stand or the side stand is used for parking.

Furthermore, since it is constituted that the rotation axis line of the lock lever 15 is made parallel to the axis line of the rear wheel 4 and that the engaging piece 15a is made to contact the outer circumferential portion of the outer circumferential cylindrical member 14 of the centrifugal clutch 8 from the front side of the rotation of the outer circumferential cylindrical member 14, the lock lever 15, and the components for supporting the lock lever 15 such as the support shaft 18 and the left hand case 6 may have low rigidity. This is because the outer circumferential cylindrical member 14 rotates the fastest of the components rotating together with the rear wheel 4 and the force for stopping the rotation of the outer circumferential cylindrical member 14 may be smaller than the force required for stopping the rotation of other rotary components.

Furthermore, even if the engaging piece 15a of the lock lever 15 comes into contact while the vehicle is running, the engaging piece 15a is rejected toward the drive permitting position and the running is not obstructed.

As described above, since the antitheft apparatus employs the lock lever disposed on the transmission case of the engine of unit swing type and having the engaging piece for engaging with the rotary member rotating together with the rear wheel, with the lock lever being capable of moving between the lock position where the engaging piece engages with the rotary member and the drive permitting position where the engaging piece disengages from the rotary member and also employs the operation lever for shifting the lock lever between the lock position and the drive permitting position, the rear wheel rotation may be prevented by rotating the operation lever to the lock position.

Therefore, theft prevention may be effected whether the main stand or the side stand is used for parking.

Since an antitheft apparatus and constituted such that the rotation axis line of the lock lever is made parallel to the rear wheel axis line and that the engaging piece is adapted to engage with the outer circumferential portion, to be press-contacted with centrifugal rollers in the centrifugal clutch, of the outer circumferential cylindrical member from the forward side of the rotating direction of the outer circumferential cylindrical member, and since the outer circumferential cylindrical member rotates the fastest of the components rotating together with the rear wheel, the force for stopping the rotation of the outer circumferential cylindrical member may be smaller than the force required for stopping the rotation of other rotary components.

Therefore, the lock lever and the components for supporting the lock lever may have low rigidity and it is possible to provide an antitheft apparatus of a small size and light weight.

Furthermore, even if the engaging piece of the lock lever contacts the outer circumferential cylindrical member while the vehicle is running, the running is not obstructed because the engaging piece is rejected forward of the rotating direction of the outer circumferential cylindrical member, namely toward the drive permitting position.

The description above discloses (amongst others) an antitheft apparatus preferably employing a lock mechanism which brings the motorcycle to the state of inability to drive as movable members for the drive are prevented from moving by the operation of leaving the protection member in the protecting position. The vehicle may be made incapable of being driven by operating the lock mechanism to protect the main switch keyhole.

According to this embodiment employing the lock mechanism which makes a ride of the vehicle impossible by stopping the movement of the movable components for the ride by securing the protection member in the protecting position, the vehicle may be made impossible to ride with the lock mechanism by operating to protect the keyhole of the main switch.
Therefore, double antitheft measures may be simply effected.

The description above further discloses another embodiment in which the protection member is disposed for free movement inside the vehicle body cover which covers the area around the main switch, the operation lever formed separately from the protection member and with its one end projecting outside the vehicle body cover is disposed for free movement, the protection member is urged toward the open position with the spring, and the operation lever is made to engage with the protection member so that the lever acts only in the direction from the open position to the protecting position of the protection member, the supporting portions of the protection member and the operation lever may be covered with the vehicle body cover. Also, since the protection member cannot be moved from the protecting position to the open position using the operation lever, the keyhole of the main switch cannot be made open to a third person even if the third person moves the operation lever in the state of the main switch being protected with the protection member. Therefore, antitheft measures is securely effected.

According to this embodiment the supporting portions of the operation lever and the protection member are covered with the vehicle body cover. Furthermore, even if a third person moves the operation lever in the state of the main switch being protected with the protecting member, since the protection member cannot be rotated from the protecting position to the open position using the operation lever, the keyhole of the main switch cannot be made open to the third person.

The description above still further discloses an antitheft apparatus for motorcycles of scooter type employing a lock lever disposed on the transmission case of an engine of unit swing type and having an engaging piece for engaging with a rotary member rotating together with the rear wheel, with the lock lever being capable of rotating between a lock position where the engaging piece engages with the rotary member and a drive permitting position where the engaging piece disengages from the rotary member and also employs an operation lever for shifting the lock lever between the lock position and the drive permitting position.

Accordingly, the rear wheel is prevented from rotating when the lock lever is rotated to the lock position.

As also disclosed for said antitheft apparatus for motorcycles of scooter type, it may be preferable if it is constituted such that the rotation axis line of the lock lever is made parallel to the rear wheel axis line and that the engaging piece is adapted to engage with the outer circumferential portion, to be press-contacted with centrifugal rollers in a centrifugal clutch, of an outer circumferential cylindrical member from the front side of the rotating direction of the outer circumferential cylindrical member.

Since the outer circumferential cylindrical member rotates the fastest among the components rotating together with the rear wheel, the force for stopping the rotation of the outer circumferential cylindrical member is the smallest of the forces required for stopping the rotation of other rotating components.
Therefore, rigidity of the lock lever and the lock lever support member may be low.
Furthermore, even if the engaging piece of the lock lever comes into contact with the outer circumferential cylindrical member while the vehicle is running, the engaging piece is rejected forward of the rotating direction of the outer circumferential cylindrical member, or toward the drive permitting position.

## Claims

1. Anti-theft apparatus for a motorcycle, comprising a protection member (9,12) adapted to be disposed in the vicinity of a switch (3) on a vehicle body frame of a motorcycle, said protection member (9,12) being moveable between a protecting position where the protection member approaches and covers a key hole (3a) of said switch (3) and an open position where a key may be inserted into said key hole (3a) and a lock device (10,28) for locking the protection member (9,12) in the protecting position.

2. Anti-theft apparatus according to claim 1, **characterized in that** the protection member comprises a rod member, which is adapted to rotate about an end thereof, and a projection (9a) on said rod member at a position corresponding to the position of said key hole (3a) in the protecting position to cover said key hole (3a).

3. Anti-theft apparatus according to claims 1 or 2, **characterized in that** the lock device (10) comprises a key cylinder (10a) and an engaging part (10b) for engagement with an end position of a moveable component of said protection member (9,12) in the protecting position, said key cylinder (10a) being adapted to unlock the engaging port (10b) to release said end portion.

4. Anti-theft apparatus according to claim 1, **characterized in that** the protection member (12) comprises a rotatable plate having a mask portion (12a) for covering said key hole (3a), said apparatus further comprising means (25) for urging said plate in said open position, an operation lever (26) for moving said mask portion (12a) in said protecting position, and releasable locking means (29) for locking the mask portion (12a) in said protecting position and for releasing said protection member (12).

5. Anti-theft apparatus according to one of the preceding claims 1 to 4. **characterized in that** said apparatus comprises a lock mechanism (61) which brings the motorcycle to a state of inability to drive by preventing moveable members for the drive from moving when the protection member is in the protecting position.

6. Anti-theft apparatus according to one of the claims 1, 4 or 5, **characterized in that** the protection member (12) is freely moveable inside a vehicle body cover covering the area around a main switch, wherein in the vicinity of the protection member an operation lever (26) is formed separately from the protection member (12) and to freely move so that its one end projects outside the vehicle body cover, with the protection member (12) being urged towards the open position by means of a spring, and with the operation lever (26) being made to engage with the protection member so that it acts only in the direction from the open position side to the protecting position side of the protection member.

## Patentansprüche

1. Anti- Diebstahlvorrichtung für ein Motorrad mit einem Schutzteil (9, 12), vorgesehen um in der Nähe eines Schalters (3) an einem Fahrzeugkarosserierahmen eines Motorrades angeordnet zu sein, wobei das Schutzteil (9, 12) zwischen einer Schutzposition, in der das Schutzteil ein Schlüsselloch (3a) des Schalters (3) erreicht und abdeckt, und einer offenen Position, in der ein Schlüssel in das Schlüsselloch (3a) eingesetzt werden kann, bewegbar ist, und einer Verriegelungsvorrichtung (10, 28), um das Schutzteil (9, 12) in der Schutzposition zu verriegeln.

2. Anti- Diebstahlvorrichtung nach Anspruch 1, **dadurch gekennzeichnet, dass** das Schutzteil ein Stangenteil aufweist, das vorgesehen ist, um sich um ein Ende desselben zu drehen, und ein Vorsprung (9a) an dem Stangenteil an einer Position, die der Position des Schlüsselloches (3a) in der Schutzposition entspricht, um das Schlüsselloch (3a) abzudecken.

3. Anti- Diebstahlvorrichtung nach Anspruch 1 oder 2, **dadurch gekennzeichnet, dass** das die Verriegelungsvorrichtung (10) einen Schlüsselzylinder (10a) und ein Eingriffsteil (10b) aufweist, um mit einer Endposition einer bewegbaren Komponente des Schutzteiles (9, 12) in der Schutzposition im Eingriff zu sein, wobei der Schlüsselzylinder (10a) vorgesehen ist, um die Eingriffsöffnung (10b) zu entriegeln, um den Endabschnitt freizugeben.

4. Anti- Diebstahlvorrichtung nach Anspruch 1, **dadurch gekennzeichnet, dass** das Schutzteil (12) eine drehbare Platte aufweist, die einen Maskenabschnitt (12a) aufweist, um das Schlüsselloch (3a) abzudecken, wobei die Vorrichtung außerdem eine Einrichtung (25) aufweist, um die Platte in die offene Position zu drücken, einen Betätigungshebel (26), um den Maskenabschnitt (12a) in die Schutzposition zu bewegen, und eine lösbare Verriegelungseinrichtung (29), um den Maskenabschnitt (12a) in der Schutzposition zu verriegeln und um das Schutzteil (12) freizugeben.

5. Anti- Diebstahlvorrichtung nach einem der vorhergehenden Ansprüche 1 bis 4, **dadurch gekennzeichnet, dass** die Vorrichtung eine Verriegelungsvorrichtung (61) aufweist, die das Motorrad in einen Zustand der Fahrunfähigkeit bringt, um die bewegbaren Teile für den Antrieb am Bewegen zu hindern, wenn das Schutzteil in der Schutzposition ist.

6. Anti- Diebstahlvorrichtung nach einem der Ansprüche 1, 4 oder 5, **dadurch gekennzeichnet, dass** das Schutzteil (12) innerhalb einer Fahrzeugkarosserieabdeckung, die den Bereich rund um einen Hauptschalter abdeckt, frei bewegbar ist, wobei in der Nähe des Schutzteiles ein Betätigungshebel (26) von dem Schutzteil (12) separat gebildet ist, und um sich frei zu bewegen, so dass sein eines Ende nach außen der Fahrzeugkarosserieabdeckung vorspringt, mit dem Schutzteil (12), das in die Richtung zu der offenen Position mittels einer Feder vorgespannt wird, und wobei der Betätigungshebel (26) vorgesehen ist, um mit dem Schutzteil in Eingriff zu kommen, so dass er nur in der Richtung von der Seite der offenen Position zu der Seite der Schutzposition des Schutzteiles wirkt.

## Revendications

1. Dispositif anti-vol destiné à une motocyclette, comprenant un élément de protection (9, 12) conçu pour être disposé au voisinage d'un commutateur (3) sur un châssis de carrosserie de véhicule d'une motocyclette, ledit élément de protection (9, 12) étant mobile entre une position de protection dans laquelle l'élément de protection se rapproche et recouvre un trou de serrure (3a) dudit commutateur (3) et une position ouverte dans laquelle une clé peut être insérée dans ledit trou de serrure (3a), et un dispositif de verrouillage (10, 28) pour verrouiller l'élément de protection (9, 12) dans la position de protection.

2. Dispositif anti-vol selon la revendication 1, **caractérisé en ce que** l'élément de protection comprend un élément de tige qui est conçu pour tourner autour d'une extrémité de celui-ci, et une protubérance (9a) sur ledit élément de tige, à une position correspondant à la position dudit trou de serrure (3a) dans la position de protection pour recouvrir ledit trou de serrure (3a).

3. Dispositif anti-vol selon la revendication 1 ou 2, **caractérisé en ce que** le dispositif de verrouillage (10) comprend un cylindre de serrure (10a) et un port d'engagement (10b) pour un engagement avec une partie d'extrémité d'un composant mobile dudit élément de protection (9, 12) dans la position de protection, ledit cylindre de serrure (10a) étant conçu pour déverrouiller le port d'engagement (10b) afin de libérer ladite partie d'extrémité.

4. Dispositif anti-vol selon la revendication 1, **caractérisé en ce que** l'élément de protection (12) comprend une plaque tournante comportant une partie de masque (12a) pour recouvrir ledit trou de serrure (3a), ledit dispositif comprenant, en outre, des moyens (25) destinés à pousser ladite plaque dans ladite position ouverte, un levier d'actionnement (26) destiné à déplacer ladite partie de masque (12a) dans ladite position de protection, et des moyens de verrouillage libérables (29) déstinés à verrouiller la partie de masque (12a) dans ladite position de protection et à libérer ledit élément de protection (12).

5. Dispositif anti-vol selon l'une des revendications précédentes 1 à 4, **caractérisé en ce que** ledit dispositif comprend un mécanisme de verrouillage (61) qui amène la motocyclette dans un état d'inaptitude à la conduite en empêchant les éléments mobiles pour la conduite de se déplacer lorsque l'élément de protection se trouve dans la position de protection.

6. Dispositif anti-vol selon l'une des revendications 1, 4 ou 5, **caractérisé en ce que** l'élément de protection (12) est librement mobile au sein du capot de carrosserie de véhicule recouvrant la zone entourant un commutateur principal, dans lequel, dans le voisinage de l'élément de protection, un levier d'actionnement (26) est formé en étant séparé de l'élément de protection (12) et pour se déplacer librement, de sorte qu'une extrémité dépasse à l'extérieur du capot de carrosserie de véhicule, l'élément de protection (12) étant poussé vers la position ouverte sous l'effet d'un ressort, le levier d'actionnement (26) étant amené à engager l'élément de protection de sorte qu'il n'agit que dans la direction allant du côté de la position ouverte au côté de la position de protection de l'élément de protection.
